# EUROPEAN PATENT APPLICATION

(11) **EP 2 581 802 A1**
(43) Date of publication of application: **17.04.2013**
(21) Application number: 12185502.7
(22) Date of filing: 21.09.2012
(51) Int. Cl.: G06F 1/16

(54) **Portable terminal**

(30) Priority: 14.10.2011 KR 20110105466
(71) Applicant: Samsung Electronics Co., Ltd, Gyeonggi-do 443-742 (KR)
(72) Inventor: Shin, Hong-Chul, 443-742 Gyeonggi-do (KR); Lee, Jae-Han, 443-742 Gyeonggi-do (KR); Lee, Seung-Hyun, 443-742 Gyeonggi-do (KR); Cho, Soon-Ik, 443-742 Gyeonggi-do (KR)
(74) Representative: Harrison Goddard Foote

(57) **Abstract**

A portable terminal is provided. The portable terminal includes a display panel, a case member provided to surround at least both sides of the display panel, and a speaker hole formed in the case member and opened to at least one side of the display panel. The portable terminal includes the speaker hole in at least a side of the display panel by changing only a structure of the case member, such that the volume and quality of sound output from the speaker device can be fully delivered to a user who uses the terminal while viewing the display panel.

## Description

### BACKGROUND OF THE INVENTION

### 1. Field of the Invention:

The present invention relates to a portable terminal. More particularly, the present invention relates to a portable terminal structured so that sound quality is improved in terms of volume and quality.

### 2. Description of the Related Art:

A portable terminal refers to an electronic device which allows a user to perform a communication function such as voice communication or message transmission and enjoy a multimedia service such as storing various information, playing games, and watching moving images. The portable electronic device has been manufactured in various forms such as an electronic note, a palm Personal Computer (PC), a portable game player, a moving image/music file player, a cellular phone, a notebook PC, and the like.

Recently, with the integration of an electronic note or multimedia function into a mobile communication terminal such as a cellular phone, a user can enjoy various contents such as a banking service like retail payment, a game/multimedia service, and the like as well as the communication function such as voice communication through the mobile communication terminal. That is, the mobile communication terminal, at its initial stage, merely provided voice communication or a short message transmission service. However, as the mobile communication terminal has been miniaturized and highly integrated with the development of electronic/communication technologies, the mobile communication terminal is now equipped with a security function allowing a user to use a banking service, a multimedia function allowing a user to enjoy games/moving images, and a simple office work function including Internet or mail transmission/reception as well as a unique communication function of the mobile communication terminal.

As the multimedia function of the portable terminal has been emphasized, sound quality needs to be improved. To enlarge a display panel for the multimedia function while maintaining and reinforcing portability, it is inevitable to reduce the thickness of the portable terminal. Therefore, an opening for outputting sound is usually positioned on a side surface of the terminal or a back surface of the terminal, which faces a surface where the display panel is mounted.

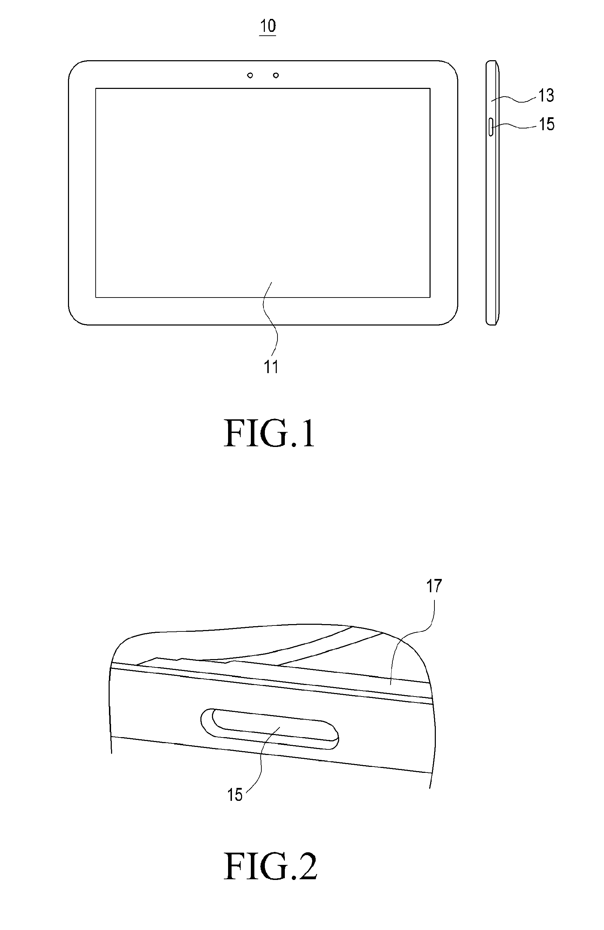

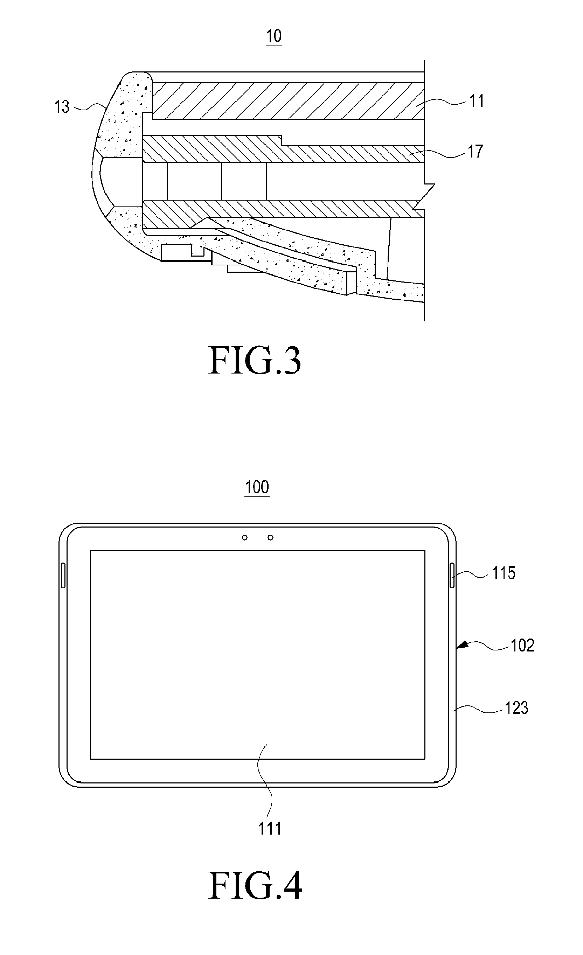

FIG. 1 is a diagram illustrating a portable terminal according to the related art. FIG. 2 is a perspective view enlarging a portion of a case member of a portable terminal according to the related art. FIG. 3 is a cross-sectional view illustrating major portions of a portable terminal according to the related art.

FIGs. 1 through 3 illustrate structures of a portable terminal 10 and a speaker device installed in the portable terminal 10 according to the related art. The portable terminal 10 has a display panel 11 on a front surface thereof and a case member 13 provided to surround the edge of the display panel 11 and face a back surface of the display panel 11. In an inner side of the case member 13 are embedded various circuit devices (not illustrated) and a battery pack (not illustrated) for operations of the portable terminal 10.

In the side surface of the portable terminal 10, more specifically, at least a side surface of the case member 13 is formed a speaker hole 15, and in the inner side of the case member 13 is mounted a waveguide member 17 accommodating a speaker module (not illustrated) therein. The waveguide member 17 delivers output sound of the speaker module to the speaker hole 15, such that the sound output from the speaker module is radiated through the side surface of the portable terminal 10.

As such, in terminals according to the related art, a speaker hole is usually provided in a side surface or a back surface. A user uses a terminal while viewing a display panel, but the user may not be sufficiently provided with sound because the sound is radiated through the side surface or back surface of the portable terminal. Moreover, when the terminal having the speaker hole for outputting the sound in the back surface thereof is placed on the bottom, sound volume and quality are significantly degraded because the speaker hole is blocked at the bottom. More particularly, in a case of a portable terminal such as a tablet PC, sound from the portable terminal is minimized when the user holds the portable terminal by hand. That is, the portable terminal, when used for watching of a movie, is typically cradled on the bottom. In this case, the sound volume and quality are inevitably degraded.

Therefore, a need exists for a system and method for delivering improved sound volume and quality of a portable terminal.

### SUMMARY OF THE INVENTION

Aspects of the present invention are to address at least the above-mentioned problems and/or disadvantages and to provide at least the advantages described below. Accordingly, an aspect of the present invention is to provide a portable terminal which can deliver sound to a user without degrading sound volume and quality while viewing a display panel of the portable terminal.

According to an aspect of the present invention, a portable terminal is provided. The portable terminal includes a display panel, a case member provided to surround at least both sides of the display panel, and a speaker hole formed in the case member and opened to at least one side of the display panel.

The portable terminal may further include a speaker module embedded in the case member, a waveguide member provided to surround the speaker module, and an output waveguide formed in the waveguide member to deliver sound output from the speaker module, in which the output waveguide extends in parallel with the display panel to be connected to the speaker hole.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:

FIG. 1 is a diagram illustrating a portable terminal according to the related art;

FIG. 2 is a perspective view enlarging a portion of a case member of a portable terminal according to the related art;

FIG. 3 is a cross-sectional view showing major portions of a portable terminal according to the related art;

FIG. 4 is a diagram illustrating a portable terminal according to an exemplary embodiment of the present invention;

FIG. 5 is a diagram enlarging a portion of a case member of a portable terminal according to an exemplary embodiment of the present invention; and

FIG. 6 is a cross-sectional view illustrating major portions of a portable terminal according to an exemplary embodiment of the present invention.

Throughout the drawings, it should be noted that like reference numbers are used to depict the same or similar elements, features, and structures.

### DETAILED DESCRIPTION OF EXEMPLARY EMBODIMENTs

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

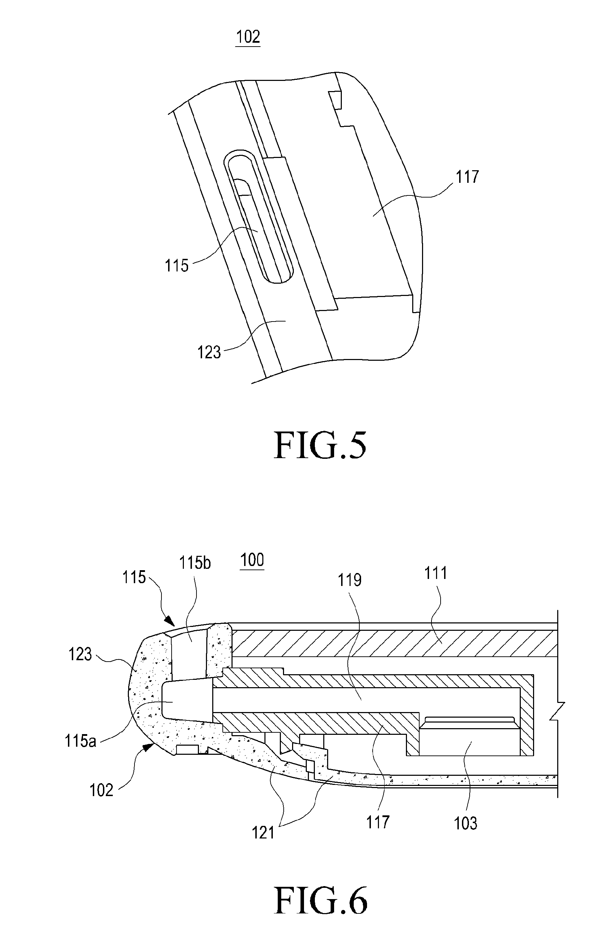

FIG. 4 is a diagram illustrating a portable terminal according to an exemplary embodiment of the present invention. FIG. 5 is a diagram enlarging a portion of a case member of a portable terminal according to an exemplary embodiment of the present invention. FIG. 6 is a cross-sectional view illustrating major portions taken of a portable terminal according to an exemplary embodiment of the present invention.

Referring to FIGs. 4-6, a display panel 111 is mounted on a front surface of a portable terminal 100, and various circuit devices (not illustrated) and a battery pack (not illustrated) are embedded in an inner side of a case member 102 coupled to surround at least both side surfaces of the display panel 111. A speaker hole 115, opened in a position which is parallel to at least a side of the display panel 111, is formed in the case member 102.

The display panel 111 is manufactured using a Liquid Crystal Display (LCD) device, a Light Emitting Diode (LED) device, an Organic LED (OLED) device, and the like, to output a screen. In addition to outputting the screen, the display panel 111 may also be used as an input device by mounting a touch panel thereon. For example, by attaching a pressure-sensitive touch panel or a capacitive touch panel on a front surface of a display device, the display panel 111 is used as a touch screen.

The case member 102 substantially forms a housing of the portable terminal 100, and the display panel 111 is mounted on a front surface of the case member 102. The case member 102 includes a rear panel 121 which faces, while being spaced apart from, the rear face of the display panel 111, and side ribs 123 which extend from both sides of the rear panel 121 and face each other. The side ribs 123 may extend from the whole edge of the rear panel 121 to surround the circumference of the display panel 111. The side ribs 123 are coupled to surround the edge of both sides of the display panel 111, such that they fix the display panel 111 to the case member 102.

A waveguide member 117 having a speaker module 103 received therein is installed in the inner side of the case member 102. The speaker module 103 generates sound by using a diaphragm and a voice coil, and outputs the generated sound through an output waveguide 119 formed in the waveguide member 117. The waveguide member 117 is made of an elastic material such as silicon, urethane or synthetic resin having rigidity. The output waveguide 119 extends in parallel with the display panel 111 and the rear panel 121 and is opened to a side of the waveguide member 117. When the speaker module 103 is installed in the inner side of the case member 102, the output waveguide 119 is arranged to extend in parallel with the display panel 111.

The speaker hole 115 includes a first waveguide 115a and a second waveguide 115b. The first waveguide 115a extends in parallel with the rear panel 121 from an inner sidewall of the side rib 123. Consequently, the first waveguide 115a, although being formed separately from the waveguide member 117, is connected with the waveguide member 117, thus substantially extending the output waveguide 119. The second waveguide 115b extends from the first waveguide 115a along an extending direction of the side rib 123 and is opened to an upper end of the side rib 123. Therefore, once the display panel 111 is coupled to the case member 102, the speaker hole 115 is positioned in at least one side of the display panel 111 or both sides of the display panel 111.

Hence, the sound generated from the speaker module 103 sequentially travels the output waveguide 119, the first waveguide 115a, and the second waveguide 115b in that order, finally being output through at least one side of the display panel 111 or both sides of the display panel 111.

As a result, a user can listen to the sound of which volume or quality is not degraded when viewing the display panel 111 regardless of a position in which the terminal 100 is cradled.

The portable terminal structured as described above provides the speaker hole in at least a side of the display panel by changing only a structure of the case member, such that the loss of sound volume and quality can be suppressed when the sound output from the speaker device is delivered to the user who uses the terminal while viewing the display panel. Moreover, the waveguide structure is used to form the speaker hole, thereby preventing the exposure of the speaker module and minimizing the exposure of the opening of the speaker hole, such that the deterioration of the exterior of the terminal can be suppressed. Furthermore, the sound output from the speaker module can be delivered through the sound waveguide, allowing the installation position of the speaker module to be freely set.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. A portable terminal comprising:
a display panel;
a case member provided to surround at least both sides of the display panel; and
a speaker hole formed in the case member and opened to at least one side of the display panel.

2. The portable terminal of claim 1, further comprising:
a speaker module embedded in the case member;
a waveguide member provided to surround the speaker module; and
an output waveguide formed in the waveguide member to deliver sound output from the speaker module,
wherein the output waveguide extends in parallel with the display panel to be connected to the speaker hole.

3. The portable terminal of any one of the preceding claims, wherein the case member comprises:
a rear panel facing the display panel; and
side ribs extending from both sides of the rear panel to face each other,
wherein the side ribs are coupled to surround both sides of the display panel, respectively.

4. The portable terminal of claim 3, wherein the speaker hole comprises:
a first waveguide extending from an inner sidewall of each of the side ribs in parallel with the rear panel; and
a second waveguide connected to the first waveguide to extend through the side rib,
wherein the second waveguide is opened to an upper end of the side rib.

5. The portable terminal of claim 4, wherein a width of the first waveguide gradually decreases in a direction away from the output waveguide, and a width of the second waveguide gradually increases in a direction away from the first waveguide.

6. The portable terminal of claim 4, further comprising:
a speaker module embedded in the case member;
a waveguide member provided to surround the speaker module; and
an output waveguide formed in the waveguide member to deliver the sound output from the speaker module,
wherein the output waveguide extends in parallel with the display panel, such that an end portion of the output waveguide is connected to the first waveguide.

7. The portable terminal of claim 6, wherein a width of the first waveguide gradually decreases in a direction away from the output waveguide, and a width of the second waveguide gradually increases in a direction away from the first waveguide.

8. A portable terminal comprising:
a display panel;
a case member provided to surround at least both sides of the display panel; and
a speaker hole formed in the case member and opened in a position parallel to at least one side of the display panel for delivering sound through an upper end of side ribs surrounding the circumference of the display panel.

9. The portable terminal of claim 8, further comprising:
a speaker module embedded in the case member;
a waveguide member provided to surround the speaker module; and
an output waveguide formed in the waveguide member to deliver sound output from the speaker module,
wherein the output waveguide extends in parallel with the display panel to be connected to the speaker hole, such that an end portion of the output waveguide is connected to the first waveguide.

10. The portable terminal of one of claims 8 and 9, wherein the case member comprises:
a rear panel facing the display panel; and
side ribs extending from both sides of the rear panel to face each other,
wherein the side ribs are coupled to surround both sides of the display panel, respectively.

11. The portable terminal of claim 10, wherein the speaker hole comprises:
a first waveguide extending from an inner sidewall of each of the side ribs in parallel with the rear panel; and
a second waveguide connected to the first waveguide to extend through the side rib,
wherein the second waveguide is opened to an upper end of the side rib.

12. The portable terminal of claim 11, wherein a width of the first waveguide gradually decreases in a direction away from the output waveguide, and a width of the second waveguide gradually increases in a direction away from the first waveguide.
